# EUROPÄISCHE PATENTSCHRIFT

(11) **EP 1 693 133 B1**
(45) Veröffentlichungstag und Bekanntmachung des Hinweises auf die Patenterteilung: **31.03.2010**
(21) Anmeldenummer: 06003208.3
(22) Anmeldetag: 17.02.2006
(51) Int. Cl.: B23B 27/16

(54) **Werkzeughalter**
Toolholder
Porte-outil

(30) Priorität: 21.02.2005 AT 962005 U
(43) Veröffentlichungstag der Anmeldung: 23.08.2006
(73) Patentinhaber: CERATIZIT Austria Gesellschaft m.b.H., 6600 Reutte /Tirol (AT)
(72) Erfinder: Maier, Johann, 6600 Pflach (AT); Kerle, Siegfried F., 6671 Rieden (Tirol) (AT)

(56) Entgegenhaltungen:
- EP-A- 0 144 859
- EP-A- 0 759 826
- EP-A- 0 846 516
- US-A- 4 400 116

## Beschreibung

Die Erfindung betrifft einen Werkzeughalter mit einer Klemmpratze zum Festklemmen eines auswechselbaren Schneideinsatzes, wobei die Klemmpratze von einer Spannschraube durchsetzt und mit dem Grundkörper des Werkzeughalters verschraubbar ist, wobei die Klemmpratze von einem Ende einer die Spannschraube umgreifenden Feder gegen den Kopf der Spannschraube gedrückt wird.

Derartige Werkzeughalter sind beispielsweise in der EP 0 759 826 B1 oder EP 0 846 516 B1 beschrieben.
Bei diesen Werkzeughaltern stützt sich die, die Spannschraube umgreifende Feder einerseits an der Klemmpratze und andererseits am Grundkörper des Werkzeughalters ab. Die Feder hat dabei die Aufgabe, dass die Klemmpratze bei gelöster Spannschraube nach oben gedrückt wird und nicht verkippen kann, so dass der Schneideinsatz leicht gewechselt werden kann. Nachteilig dabei ist, dass das Klemmsystem mit Klemmpratze, Spannschraube und Feder aus drei unabhängigen Einzelteilen besteht, die nicht miteinander verbunden sind. Dadurch müssen beim Ersteinbau des Klemmsystems oder bei einem Austausch des Klemmsystems die drei zusammengehörigen Einzelteile miteinander verbunden und dann mit dem Grundkörper verschraubt werden. Da es unterschiedliche Größen und Bauformen derartiger Klemmsysteme gibt, ist immer darauf zu achten, dass die richtigen Bauformen und Baugrößen miteinander verbunden werden, wodurch die Lagerhalterung und das Handling dieser Einzelteile deutlich erschwert wird.

Die US 4,400,116, die als nächstliegender Stand der Technik anzusehen ist, beschreibt einen Werkzeughalter nach dem Oberbegriff des Anspruchs 1 mit Klemmpratze, Spannschraube und Feder, bei dem sich die Feder einerseits an der Klemmpratze und anderseits an einer an der Spannschraube befestigten Scheibe abstützt. Nachteilig dabei ist, dass das Klemmsystem aus einem weiteren Einzelteil besteht.

Die Aufgabe der vorliegenden Erfindung ist es, einen Werkzeughalter mit einem Klemmsystem aus Klemmpratze, Spannschraube und Feder zu schaffen, bei dem es möglich ist die drei Einzelteile schon vor dem Verschrauben mit dem Grundkörper des Werkzeughalters miteinander zu verbinden.

Erfindungsgemäß wird dies dadurch erreicht, dass sich das andere Ende der Feder an einem Bund der Spannschraube oberhalb des Gewindes abstützt, und dass die Feder konisch ausgeführt ist und sich mit ihrem kleineren Durchmesser an der Spannschraube abstützt. Dadurch, dass die Spannschraube so ausgeführt ist, dass sich die Feder mit ihrem zweiten Ende an ihr abstützen kann, wird es ermöglicht, dass die drei Einzelteile des Spannsystems schon vor dem Zusammenbau mit dem Werkzeuggrundkörper unverlierbar miteinander verbunden werden können.

Der Zusammenbau des Klemmsystems erfolgt so, dass die Spannschraube durch die Bohrung der Klemmpratze geschoben wird und die konische Feder mit ihrem größeren Durchmesser zuerst von unten über das Gewinde geschoben wird, bis der kleinere Durchmesser unterhalb des Bunds ansteht. Dann muss die Feder an diesem Ende durch Verdrehen gegen die Wickelrichtung aufgeweitet werden und kann über den Bund geschoben werden. Nach der Montage zieht sich die Feder wieder auf ihren ursprünglichen Durchmesser zusammen und liegt dann mit dem Ende mit dem größeren Durchmesser an der Innenseite der Klemmpratze und mit dem anderen Ende mit dem kleineren Durchmesser am Bund der Schraube fest an, wodurch die drei Teile, Klemmpratze, Schraube und Feder, federnd und unverlierbar miteinander verbunden sind.

Das erfindungsgemäße Klemmsystem lässt sich besonders gut bei Wendeschneidplatten mit Mittelloch einsetzen, wobei dann die Klemmpratze am vorderen Ende eine Nase aufweist, die in das Mittelloch eingreift.

Weiters ist es in einer solchen Ausführung von Vorteil, wenn die Klemmpratze auch an ihrem rückwärtigen Ende einen nasenförmigen Vorsprung aufweist, welcher sich auf einer schräg nach abwärts geneigten Fläche des Werkzeuggrundkörpers abstützt.
Auf diese Weise wird, bei ausreichendem Spiel zwischen Spannschraube und Klemmpratze, die Klemmpratze nach rückwärts gezogen und damit die Wendeschneidplatte über die ins Mittelloch eingreifende Nase fest, an die rückwärtige bzw. seitlichen Anschlagflächen im Werkzeuggrundkörper gespannt.

Eine besonders stabile Klemmung eines Mittelloch-Schneideinsatzes lässt sich erreichen, wenn Klemmpratze, Schneideinsatz und schräg nach abwärts geneigte Fläche des Werkzeuggrundkörpers derart aufeinander abgestimmt sind, dass die Klemmpratze bei festgeklemmtem Schneideinsatz leicht nach hinten geneigt ist, wobei sich der Bund der Spannschraube an der Bohrungswandung im Werkzeuggrundkörper abstützt. Dadurch wird erreicht, dass der Kopf der Spannschraube definiert an einem Bereich der Klemmpratze aufliegt, der möglichst nahe beim Schneideinsatz liegt, wodurch die Klemmkraft auf die Wendeplatte wesentlich verbessert wird.

Im Folgenden wird die Erfindung an Hand von Figuren näher erläutert.
Es zeigen:
- Figur 1: einen erfindungsgemäßen Werkzeughalter im Schnitt
- Figur 2: das Klemmsystem des Werkzeughalters nach Fig. 1 in getrenntem Zustand der Einzelteile
- Figur 3: das Klemmsystem nach Fig. 2 im Schnitt mit zusammengebauten Einzelteilen

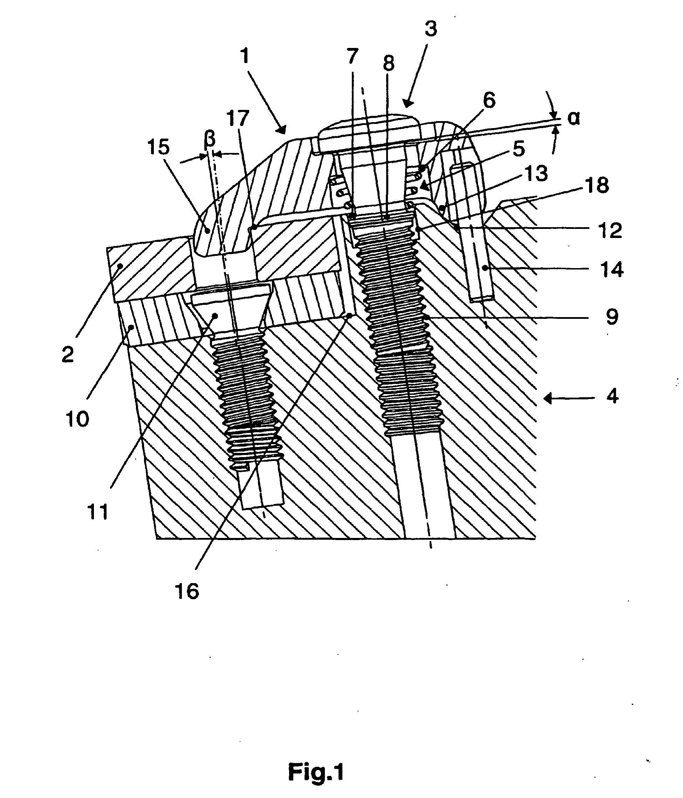

Ein erfindungsgemäßer Werkzeughalter gemäß Fig. 1 besteht aus einem Werkzeuggrundkörper -4- mit einer Ausnehmung -16- zur Aufnahme einer auswechselbaren Wendeschneidplatte -2- mit Mittelloch aus Hartmetall. Die Wendeschneidplatte -2- liegt dabei nicht unmittelbar an der Grundfläche der Ausnehmung -16- auf, sondern liegt auf einer Unterlagsplatte -10- aus Hartmetall auf, welche über eine Befestigungsschraube -11- in der Ausnehmung -16- befestigt ist. In das Mittelloch der Wendeschneidplatte -2- greift eine Nase -15- am vorderen Ende einer Klemmpratze -1- ein. Die Klemmpratze -1- ist in ihrem Mittelbereich von einer Spannschraube -3- durchsetzt und über diese Spannschraube -3- mit dem Werkzeuggrundkörper -4- über ein Gewinde -9- verschraubbar. Die Klemmpratze -1- weist weiters am rückwärtigen Ende einen nasenförmigen Vorsprung -13- auf, der sich auf einer nach abwärts geneigten Fläche -12- des Werkzeuggrundkörpers -4- abstützt. Beim Verschrauben der Klemmpratze -1- mit dem Werkzeuggrundkörper gleitet der nasenförmige Vorsprung -13- an der abwärts geneigten Fläche -12- nach unten. Da die Bohrung der Klemmpratze -1- zur Aufnahme des Schaftes und des Kopfes der Spannschraube -3- Spiel aufweist wird die Klemmpratze gleichzeitig nach rückwärts bewegt und zieht dabei die Wendeschneidplatte -2- über die ins Mittelloch eingreifende Nase -15- fest an die seitlichen Anlageflächen der Ausnehmung -16-. Gleichzeitig wird die Wendeschneidplatte -2- über eine hinter der Nase -15- der Klemmpratze -1- angeordnete ebene Fläche -17- auch gegen die Auflagefläche der Unterlagsplatte -10- gespannt. Klemmpratze -1-, Schneideinsatz -2- und schräg nach abwärts geneigte Fläche -12- des Werkzeuggrundkörpers -4- sind dabei derart aufeinander abgestimmt, dass die Klemmpratze -1- bei festgeklemmtem Schneideinsatz -2- unter einem Winkel α leicht nach hinten geneigt ist, wobei sich die Spannschraube -3- mit einem Bund -8- an der Bohrungswandung -18- im Werkzeuggrundkörper -4- abstützt und ein Abdrängen der Spannschraube -3- bzw. des Schraubenkopfes nach hinten vermieden wird.
Auf diese Weise wird erreicht, dass sich der Kopf der Spannschraube -3- im Wendeschneidplatten -2- nahen Bereich an der Klemmpratze -1- abstützt, wodurch eine besonders stabile Klemmung der Wendeschneidplatte -2- erreicht wird. Durch diese Neigung der Klemmpratze -1- um den Winkel α wird zwangsläufig die Symmetrieachse der Nase -15-, die ohne diese Neigung parallel zur Bohrungswandung des Mittelloches der Wendeschneidplatte -2- verlaufen würde, um einen Winkel β verkippt, was aber keine Nachteile für die Klemmung der Wendeschneidplatte -2- mit sich bringt, da die an der Bohrungswandung anliegende Fläche der Nase -15- bombiert ausgeführt ist. Der Bund -8- der Klemmschraube -3- dient gleichzeitig als Anlagefläche für das Ende -7- mit dem kleineren Durchmesser einer konischen Feder -5-, welche die Spannschraube -3- umgreift und sich mit dem anderen Ende -6-mit dem prößeren Durchmesser an der Klemmpratze -1- abstützt. Dadurch wird erreicht, dass Klemmpratze -1-, Spannschraube -3- und konische Feder -5- eine federnde Einheit bilden, welche Bewegungen zwischen Klemmpratze -1- und Spannschraube -3- erlaubt, ohne dass die Klemmpratze -1- verkippen kann. Dadurch wird erreicht dass die Wendeschneidplatte -2- leicht aus ihrer Auflage entfernt werden kann.

Eine Ausnehmung am Ende der Klemmpratze -1- die einen im Werkzeuggrundkörper -4- befestigten Stift -14- mit Spiel umgreift verhindert dabei gleichzeitig ein seitliches Verdrehen der Klemmpratze -1- beim Lösen der Spannschraube -3-.

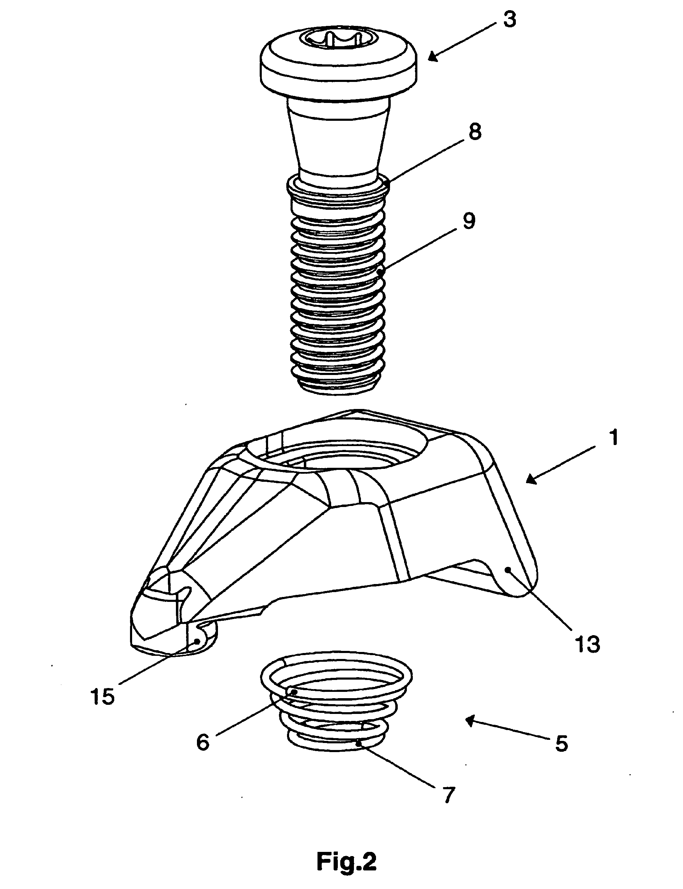

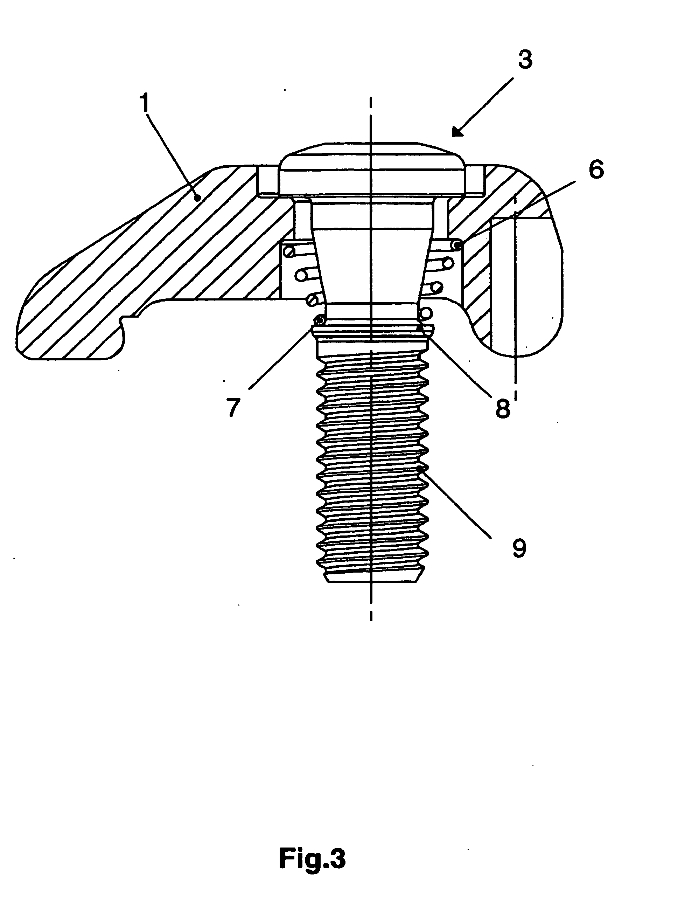

In Figur 2 ist das Klemmsystem, bestehend aus Klemmpratze -1-, Spannschraube -3- und konischer Feder -5- in getrenntem Zustand dargestellt. Zum Einbau im Werkzeuggrundkörper -4- werden die Einzelteile vorher durch Einführen der Spannschraube -3- in das Mittelloch der Klemmpratze -1-, Aufdrehen der konischen Feder -5- am Ende -7-mit dem kleineren Durchmesser und Führen der konischen Feder -5- über den Bund -8- der Spannschraube -3-, miteinander verbunden. Nach dem Einrasten des Endes -7- der konischen Feder -5- hinter dem Bund -8- der Spannschraube -3- wird eine unverschiebbare, zusammenhängende Einheit von Spannschraube -3-, Klemmpratze -1- und konischer Feder -5- gebildet, was in Figur 3 dargestellt ist.

## Patentansprüche

1. Werkzeughalter mit einer Klemmpratze (1) zum Festklemmen eines auswechselbaren Schneideinsatzes (2), wobei die Klemmpratze (1) von einer Spannschraube (3) durchsetzt und mit dem Grundkörper (4) des Werkzeughalters verschraubbar ist, wobei die Klemmpratze (1) von einem Ende (6) einer, die Spannschraube (3) umgreifenden Feder (5), gegen den Kopf der Spannschraube (3) gedrückt wird,
**dadurch gekennzeichnet,**
**dass** sich das andere Ende (7) der Feder (5) an einen Bund (8) der Spannschraube oberhalb des Gevindes (8) abstützt und dass dei Feder (5) konisch ausgeführt ist und sich mit ihrem kleineren Durchmesser an der Spannschraube (3) abstützt.

2. Werkzeughalter nach Anspruch 1, **dadurch gekennzeichnet, dass** die Klemmpratze (1) am vorderen Ende eine Nase (15) aufweist die in ein Mittelloch des Schneideinsatzes (2) eingreift.

3. Werkzeughalter nach Anspruch 3, **dadurch gekennzeichnet, dass** die Klemmpratze (1) am rückwärtigen Ende einen nasenförmigen Vorsprung (13) aufweist, welcher sich auf einer schräg nach abwärts geneigten Fläche (12) des Werkzeuggrundkörpers (4) abstützt.

4. Werkzeughalter nach Anspruch 3, **dadurch gekennzeichnet, dass** die Nase (13) eine Ausnehmung aufweist, in welche ein im Werkzeuggrundkörper (4) befestigter Stift (14) eingreift.

5. Werkzeughalter nach einem der Ansprüche 3 oder 4, **dadurch gekennzeichnet, dass** die Klemmpratze (1), der Schneideinsatz (2) und die schräg nach abwärts geneigte Fläche (12) des Werkzeuggrundkörpers (4) derart aufeinander abgestimmt sind, dass die Klemmpratze (1) bei geklemmtem Schneideinsatz (2) leicht nach hinten geneigt ist, wobei sich der Bund (8) der Spannschraube (3) an der Bohrungswandung (18) im Werkzeuggrundkörper (4) abstützt.

## Claims

1. Tool holder having a clamping claw (1) for securing a replaceable cutter insert (2), a clamping screw (3) extending through the clamping claw (1) and the clamping claw (1) being able to be screwed to the base member (4) of the tool holder, with the clamping claw (1) being pressed against the head of the clamping screw (3) by one end (6) of a spring (5) which engages round the clamping screw (3),
**characterised in that**
the other end (7) of the spring (5) is supported on a collar (8) of the clamping screw (3) above the thread (8) and **in that** the spring (5) is constructed so as to be conical and is supported on the clamping screw (3) with the relatively small diameter thereof.

2. Tool holder according to claim 1, **characterised in that** the clamping claw (1) has, at the front end, a projection (15) which engages in a central hole of the cutter insert (2).

3. Tool holder according to claim 2, **characterised in that** the clamping claw (1) has, at the rear end, a catch-like projection (13) which is supported on a face (12) of the tool base member (4) which is inclined obliquely downwards.

4. Tool holder according to claim 3, **characterised in that** the projection (13) has a recess, in which a pin (14) secured in the tool base member (4) engages.

5. Tool holder according to either claim 3 or claim 4, **characterised in that** the clamping claw (1), the cutter insert (2) and the face (12) of the tool base member (4) which is inclined obliquely downwards correspond to each other in such a manner that the clamping claw (1) is inclined slightly backwards when the cutter insert (2) is clamped, the collar (8) of the clamping screw (3) being supported on the hole wall (18) in the tool base member (4).

## Revendications

1. Porte-outil à griffe de serrage (1) pour serrer à bloc une plaquette de coupe interchangeable (2), dans lequel la griffe de serrage (1) est traversée par une vis de tension (3) et peut être vissée sur le corps de base (4) du porte-outil, et dans lequel la griffe de serrage (1) est poussée contre la tête de la vis de tension (3) par une extrémité (6) d'un ressort (5) entourant la vis de tension (3),
**caractérisé en ce que**
l'autre extrémité (7) du ressort (5) s'appuie sur une collerette (8) formée sur la vis de tension (3) au dessus du filetage (9), et **en ce que** le ressort (5) est conique et s'appuie par son plus petit diamètre sur la vis de tension (3).

2. Porte-outil selon la revendication 1, **caractérisé en ce que** la griffe de serrage (1) comporte à l'extrémité avant un taquet (15) qui pénètre dans un orifice central de la plaquette de coupe (2).

3. Porte-outil selon la revendication 2, **caractérisé en ce que** la griffe de serrage (1) comporte à l'extrémité arrière une saillie (13) en forme de taquet qui s'appuie sur une surface (12), inclinée en oblique vers l'arrière, du corps de base (4) du porte-outil.

4. Porte-outil selon la revendication 3, **caractérisé en ce que** le taquet (13) comporte un évidement dans lequel pénètre une cheville (14) fixée dans le corps de base (4) du porte-outil.

5. Porte-outil selon la revendication 3 ou 4, **caractérisé en ce que** la griffe de serrage (1), la plaquette de coupe (2) et la surface (12), inclinée en oblique vers l'arrière, du corps de base (4) du porte-outil sont adaptées entre elles d' une manière telle que la griffe de serrage (1) est légèrement inclinée vers l'arrière lorsque la plaquette de coupe (2) est serrée, la collerette (8) de la vis de tension (3) s'appuyant alors sur la paroi (18) de l'alésage à l'intérieur du corps de base (4) du porte-outil.
